(19) Europäisches Patentamt
European Patent Office
Office européen des brevets

(11) **EP 3 781 278 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **19715119.4**

(22) Anmeldetag: **09.04.2019**

(51) Internationale Patentklassifikation (IPC):
**B01D 9/00** (2006.01)    **B01D 29/085** (2006.01)
**B01D 29/60** (2006.01)

(52) Gemeinsame Patentklassifikation (CPC):
**B01D 29/601; B01D 9/0045; B01D 9/0063; B01D 29/085**

(86) Internationale Anmeldenummer:
**PCT/EP2019/058886**

(87) Internationale Veröffentlichungsnummer:
**WO 2019/201661 (24.10.2019 Gazette 2019/43)**

(54) **PROZESSMONITORING UND KONTROLLE EINER FILTRATION DURCH FILTRATMESSUNGEN**

FILTRATE MEASUREMENT-BASED MONITORING OF A FILTRATION PROCESS

SUIVI DE PROCESSUS D'UNE FILTRATION AU MOYEN DES MESURES DE FILTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2018 EP 18167620**

(43) Veröffentlichungstag der Anmeldung:
**24.02.2021 Patentblatt 2021/08**

(73) Patentinhaber: **Bayer Aktiengesellschaft**
**51373 Leverkusen (DE)**

(72) Erfinder:
• **ENGELHARDT, Kathrin, Annette**
**51375 Leverkusen (DE)**
• **GROSS, Reinhard**
**51375 Leverkusen (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**EP-A1- 0 009 527    US-A- 3 815 745**

• **KOPRA ET AL: "Application of the refractometer in the measurement and monitoring of brown stock washing, doctoral dissertation", 1 January 2015 (2015-01-01), XP055374630, Retrieved from the Internet <URL:https://aaltodoc.aalto.fi/bitstream/handle/123456789/15451/isbn9789526061344.pdf?sequence=1&isAllowed=y> [retrieved on 20170519]**
• **LOUHI-KULTANEN ET AL: "Filter cake washing: Partial dissolution of organic particles and real-time monitoring based on Raman spectroscopy", SEPARATION AND PURIFICATION TECHNOLOGY, ELSEVIER SCIENCE, AMSTERDAM, NL, vol. 59, no. 3, 4 February 2008 (2008-02-04), pages 270 - 276, XP022453823, ISSN: 1383-5866, DOI: 10.1016/J.SEPPUR.2007.06.017**

## Beschreibung

Die Anmeldung betrifft Lösungen für das Monitoring, die Prozesssteuerung und Überwachung einer Feststoff-Filtration, insbesondere des Waschvorgangs dieses Feststoffes in einer Filtrationsanlage. Bei diesem Feststoff handelt es sich ein rieselfähiges Material, typischerweise das Ergebnis einer Kristallisation bzw. Präzipitation in der Form von Granulat oder Pulver, und allgemein auch als Schüttgutfeststoff bezeichnet wird.

Üblicher Produktionsprozess zur Herstellung von festen Wirkstoffen gliedert sich ab Kristallisation bzw. Präzipitation wie folgt:

1. Kristallisation/ Präzipitation, auch Feststoffbildung genannt: In diesem Schritt des Produktionsprozesses entsteht der Feststoff suspendiert in Mutterlauge,
2. Filtration: der Feststoff wird in einem Filterapparat für Druck-, Vakuum oder Zentrifugalfiltration (auch im Folgenden als Filterapparate zusammenfassend genannt) von der Mutterlauge abgetrennt.

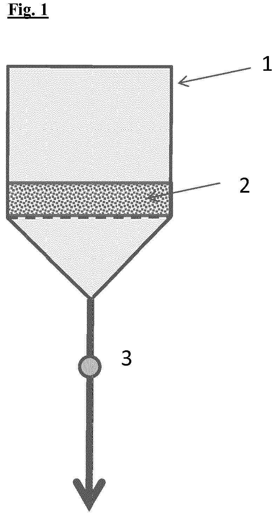

Übliche Filterapparate sind z. B. Nutschen, Zentrifugen, Trommel-oder Scheibenfilter etc., aber auch Porzellan-oder Glastrichter mit flachen Siebboden oder Fritte, oder ein son stige s poröses Filterelement. Bei der Verwendung einer Nutsche wird z.B. die zu filtrierende Suspension auf den Apparat überführt, unter Druck oder Vakuum wird das Filtrat vom Feststoff getrennt, und abgeführt. Eine Nutsche ist exemplarisch in Fig. 1 schematisch dargestellt.

Üblicherweise schließen sich im Schritt 3 einer Feststofffiltration die Wäsche des Filterkuchens in einem Verdrängungs- und / oder Resuspendierungswaschvorgang an, um den Feststoff "sauber zu waschen" d.h. die geforderte Qualitätsmerkmale für den Feststoff zu erreichen. In diesem Schritt werden üblicherweise festgelegte Mengen Lösungsmittel (frisch oder recycelt) in einer festgelegten Anzahl von Waschschritten auf dem Filterkuchen gleichmäßig verteilt. Die Anzahl der Wäschen ist dabei abhängig von der geforderten Reinheit des Feststoffs. In der Regel wird der Filterapparat zwischen den Waschschritten nicht geöffnet, sodass aus diesem und anderen Gründen eine Beprobung des Filterkuchens nicht möglich ist.

Im Schritt 4 wird der Feststoff getrocknet. Dies geschieht üblicherweise entweder auch auf der Drucknutsche (Nutschtrockner) oder in einem separaten Trocknungsapparat.

Zwischen Schritt 3 und 4 können sich noch Schritte zur Formulierung z.B. Zugabe von Verflüssigern, Stabilisatoren etc. befinden.

Typischerweise wird der Filtrations- und Waschvorgang als eine "Black Box" betrachtet, der durch Versuche und Fehler optimiert wird (Ruslim et al., Chemical Engineering Science 62 (2007) 3951 - 3961). Ruslim et al. befasst sich mit dem Problem einer heterogenen Distribution des Waschmittels in einem Filtrations- und Waschvorgang. Er untersucht eine Messung des Filterkuchens online, bevorzugt aber die offline Messung und schreibt, dass Messungen des Filterkuchens besser sind, statt Messung des Filtratstroms. Die Messung des Filtratstroms nutzt er lediglich zur vollständigen Prüfung auf Verunreinigungen.

LOUHI-KULTANEN et al. beschreibt ein Verfahren und einen Messapparat zur Kontrolle eines Filtrations- und Waschvorgangs mit einem Raman-Spektrometer, in dem ebenfalls eine Messung im Filterkuchen durchgeführt wird. Es handelt sich dabei um eine lokale Messung (auf der Kuchenoberfläche) oder um eine invasive Messmethode (Immersionsoptik), die den Filterkuchen beschädigt. Darüber hinaus ermöglicht diese Methode keine Spurenmessung, da die Messgrenze eines Raman-Spektrometers bei 1% liegt. LOUHI-KULTANEN et al. gibt keinen Hinweis auf eine Messung des Filtratsstroms (LOUHI-KULTANEN et al.: "Filter cake washing: Partial dissolution of organic particles and real-time monitoring based on Raman spectroscopy", SEPARATION AND PURIFICATION TECHNOLOGY, ELSEVIER SCIENCE, AMSTERDAM, NL, Bd. 59, Nr. 3, 4. Februar 2008 (2008-02-04), Seiten 270-276, XP022453823, ISSN: 1383-5866, DOI: 10.1016/J.SEPPUR.2007.06.017).

Eine Qualitätskontrolle des Feststoffs während er noch im Filterapparat vorliegt (d .h. Punkt 2 bzw. 3) findet nach dem aktuellen Stand der Technik in industriellen Filtrations- und Waschvorgangsprozessen nicht statt. In der Regel wird die Analytik lediglich nach Abschluss von Schritt 4 durchgeführt. Typischerweise werden vom getrockneten Filterkuchen Feststoffproben gezogen und im Labor meist mittels Chromatographie analysiert. Allgemein wird in der Fachwelt davon ausgegangen, dass die Qualität des Filterkuchens nur durch direkte Filterkuchen-Analyse ermittelt werden kann. Die Überwachung der Qualität von Filterkuchen im Filtrationsprozess wurde infolgedessen bisher von den Fortschritten der Online Messtechnik nicht betroffen. Erfüllt der überprüfte Filterkuchen nicht die Spezifikation, muss daher das getrocknete Produkt erneut prozessiert, verworfen oder verschnitten werden. Die Menge an Waschmedium und die Waschstrategie (Verdrängungs-, Gegenstrom- bzw. Anmaischwäsche) wird typischerweise einmalig experimentell ermittelt und durch Analyse des Filterkuchens validiert.

Wäre eine frühe Qualitätskontrolle des Feststoffs möglich, könnte bei einer schlechten Qualität sofort reagiert werden und z. B. eine zusätzliche Wäsche durchgeführt werden (vorausgesetzt die Verunreinigungen sind auswaschbar und nicht im Kristall eingeschlossen). Bei einer sehr guten Qualität könnte ggf. auf Wäschen bzw. Waschmedium und damit Lösungsmittel oder auch Wasser verzichtet werden. Beide Varianten würden direkt massive Zeit- und Kostenersparnis ermöglichen.

Kopra et al. offenbart ein Verfahren und einen Messapparat zur Kontrolle des Filtrations- und Waschvorgangs für die Papierindustrie in einer Zellstoffwäsche mit einem Refraktometer. In diesem Verfahren wird der Brechungsindex des Waschmediums bestimmt, das in den Filterapparat und aus dem Filterapparat geleitet wird, mit dem Ziel zu ermitteln, ob das Waschmedium wiederverwendet werden kann. Die Waschmittelzufuhr wird anhand der Messwerte angepasst, um unerwünschte Waschverluste zu vermeiden. Kopra et al. gibt keinen Hinweis über die Nutzung dieser Messwerte, um Rückschlüsse über den Verlauf des Waschvorgangs oder die Qualität des Filterkuchens zu gewinnen. Angesichts des Filterapparats wäre dies auch nicht möglich, da keine separate Messung aus den jeweiligen Waschzonen vorhanden ist. (Kopra et al. "Application of the refractometer in the measurement and monitoring of brown stock washing, doctoral dissertation",, 1. Januar 2015 (2015-01-01), XP055374630, URL:https://aaltodoc.aalto.fi/bitstream/handle/123456789/ 15451/is bn9789526061344.pdf?sequence=l&isAllowed=y).]

EP0009527A1 beschreit eine automatisierte Lösung zur unterbrochenen Wäsche (intermittent wash), in der die Änderung der Leitfähigkeit über eine vordefinierte "on" Zeit geprüft wird. Eine Zeituhr wird zur Messung einer Zeit verwendet, in der die Sonde der Leitfähigkeitszelle mit hochleitfähiger Waschflüssigkeit für eine Zeitdauer gewaschen wird, die ausreicht, damit sich ein Anfangsgleichgewicht einstellt wird. Über eine weitere Zeituhr, werden Waschperiode(n) bzw. Waschunterbrechunge(n) ("on" and "off" periods), kontrolliert. Die Methode erfordert Waschunterbrechungen einer Mindestzeitlänge. Für die Kontrolle des Waschvorgangs wird der Messwert mit einem vordefinierten Wert verglichen.

US 3 3 815 745 A beschreibt ein Apparat mit Sensoren zur Messung des Waschvorgangs (cake washing degree sensors), wobei zur Kontrolle des Waschvorgangs der Unterschied zwischen der Leitfähigkeit der Waschflüssigkeit im Verteiler und der verbrauchten Waschflüssigkeit in der Rohrleitung gemessen wird. Der Unterschied zwischen der Leitfähigkeit der frischen Waschflüssigkeit und der der abgeführten verbrauchten Waschflüssigkeit verringert sich im Laufe des Kuchenwaschschritts. Sobald der gewünschte Kuchenwaschgrad erreicht ist, wird der Waschvorgang unterbrochen.

Es bestand daher die Aufgabe eine Lösung für die Überwachung von Filtrations- und Waschprozessen bereitzustellen, die für eine Online-Überwachung verwendbar ist, Rückschlüsse über den Verlauf des Prozesses, insbesondere über die Qualität des Filterkuchens, ermöglicht, keine Unterbrechung des Waschprozesses für die Qualitätskontrolle eines Filterkuchens erfordert oder Beschädigung des Filterkuchens verursacht.

Die Aufgabe wurde durch den Einsatz von Messtechnik zur Messung im Filtratstrom aus einem Filterapparat, gelöst, wobei Parameterwerte des Filtratstroms über die Zeit des Waschvorgangs gemessen werden, deren Änderungen über die Zeit analysiert werden, wobei die Parameter des Filtratstroms aus der Gruppe umfassend Brechungsindex, Dichte, Ultraschalllaufzeit, Redox-Potential sowie spektroskopische Summeneigenschaften und/oder stoffspezifischen Eigenschaften einer oder mehreren Haupt- oder Nebenkomponente selektiert werden. Überraschenderweise wurde festgestellt, dass diese computer-implementierte Analyse, während der Filtration, Rückschlüsse über den Fortschritt und Qualität des Filtrations- und Waschprozesses ermöglicht. Die Erfindung ist im beigefügten Anspruchssatz beschrieben.

Erster Gegenstand der Anmeldung ist ein Verfahren zum Monitoring und zur Kontrolle eines Filtration- und Waschvorgangs eines Schüttgutfeststoffs in einem Filterapparat zur Kuchenfiltration gemäß Anspruch 1 und die davon abhängigen Ansprüche.

Als geeignete messbare Parameter des Filtratstroms im Sinne der Anmeldung sind Brechungsindex, Dichte, Ultraschalllaufzeit, Redoxpotential sowie spektroskopische Summen- und/oder stoffspezifische Eigenschaften mindestens eines repräsentativen Bestandteils im Filtratstrom (Haupt- und/oder Nebenkomponente), wie etwa Absorption, Impedanz, Farbe oder das Fluoreszenzsignal des Filtrates. Für wässrige Medien können auch pH-Wert und/oder Leitfähigkeit verwendet werden.

Die Auswahl der Messmethode hängt aber von den im Prozess verwendeten Substanzen (insb. Produkt(e) und / oder Nebenprodukt(e)) ab. Besonders bevorzugt wird die Messung des Brechungsindexes und / oder der Dichte des Filtrats im Verlauf der Filtration und Wäsche verwendet. Auch können eine oder mehrere der oben genannten Methoden kombiniert werden. Ebenso können für die Qualitätskontrolle neben den reinen Messwerten (Rohdaten) auch Konzent-rationen der (Neben)komponente unter Verwendung zuvor ermittelter Kalibrierfunktionen ermittelt werden.

In einer bevorzugten Ausführungsform des Verfahrens wird eine parallele Aufnahme von Brechungsindex und die im Stand der Technik (gemäß VDI Richtlinie 2762) übliche Messung der Filtratmasse durchgeführt.

Das Verfahren eignet sich sowohl für die Überwachung eines kontinuierlichen als für die Überwachung eines Batch-Prozesses. Bei einem kontinuierlichen Wäscheprozess im Sinne der Anmeldung wird das Waschmedium kontinuierlich auf dem Filterkuchen dosiert, so dass der Filterkuchen gleichmäßig über seine komplette Fläche bedeckt ist. Bei einem Batch-Prozess wird für die Wäsche eine vordefinierte Menge Waschmedium auf dem Filterkuchen aufgegeben.

Bevorzugt umfasst das Verfahren Computer-implementierte Schritte zur Analyse der Messdaten. Üblicherweise werden diese Schritte durch ein entsprechend konfiguriertes Computer-System durchgeführt.

Für die Analyse der Messdaten werden diese von der bzw. den Messvorrichtungen z. B. über ein Daten-Interface (OPC, SQL, Feldbus, z. B. Profibus, Modbus, Ethernet, Analogsignal usw.) übertragen; die importierten Messdaten werden in einem Archivierungsmodul, z. B. einem Datenbankmodul gespeichert, in dem die Messdaten und einen Zeitstempel t, sowie bevorzugt alle Informationen zur eindeutigen Identifikation der Produktionscharge hinterlegt werden.

Das Datenbankmodul ist mit einem Auswertesystem verbunden. Ein Auswertesystem im Sinne der Anmeldung ist ein Messleitsystem oder ein für die Durchführung der Verfahrensschritte konfigurierter Computer.

Weiterer Gegenstand der Anmeldung ist daher ein Computersystem zur Kontrolle eines Filtrations- und Waschvorgangs eines Schüttgutfeststoffs in einem Filterapparat zur Kuchenfiltration, wobei das Computersystem umfasst:

- ein Archivierungsmodul konfiguriert für die Speicherung von Parameterwerten eines Filtratstroms mit einem Zeitstempel t übertragen aus mindestens einer Messvorrichtung im oder am einem Filtratablauf des Filterapparats über die Zeit des Filtrations- und Waschvorgangs und für die Weitergabe dieser an ein Auswertesystem,

- das Auswertesystem, das mit dem Archivierungsmodul verbunden ist und zur Durchführung des im beigefügten Anspruchssatz definierten Verfahrens konfiguriert ist, um Änderungen der Parameterwerte über die Zeit zu analysieren, und aus dieser Änderungsanalyse das Ende des Filtrations- und Waschvorgangs und / oder die Effektivität des Waschvorgangs zu ermitteln,

- Ein Element zur Anzeige über das Ende des Filtrations- und Waschvorgangs und / oder die Effektivität des Waschvorgangs, und/oder

- Ein Element zur Erteilung eines Befehls zum Beenden des Filtrations- und Waschvorgangs.

Typischerweise ist das Auswertesystem mit einem System zur Kontrolle einer Waschmediumzufuhr verbunden und konfiguriert, um Befehle zu Weiterführung bzw. Beendung der Waschmediumzufuhr erteilen zu können.

Besonders bevorzugt wird die Zufuhr des Waschmediums mit Hilfe des Auswertesystems gestartet, beendet, bzw. ein neuer Waschvorgang wird veranlasst dadurch, dass das Auswertesystem den entsprechenden Befehl an eine steuerbare Waschmediumzufuhr (z. B. Ventile) erteilt. Typischerweise ist die Waschmediumzufuhr über ein oder mehrere Steuerelemente zur Steuerung der Waschmediumzufuhr steuerbar (z. B. ein Prozessleitsystem).

In einer besonderen Ausführungsform des Verfahrens wird eine Grenzwertbetrachtung durchgeführt.

Die Messdatenanalyse umfasst bei einer Grenzwertbetrachtung der Rohdaten oder der daraus errechneten Konzentrationswerte typischerweise folgende Schritte:

1. Transfer der Messwerte der überwachten Parameter des Filtratstroms in das Auswertesystem über einen vordefinierten Zeitabschnitt des Filtrations- und Wäscheprozesses mindestens bis zum **Erreichen** eines vordefinierten Parameterwerts, der zuvor experimentell oder aus der Erfahrung ermittelt wurde und der gewünschten Qualität des Filterkuchens entspricht. Wird dieser Wert erreicht, kann davon ausgegangen werden, dass der Filterkuchen im Einklang mit der Spezifikation gewaschen ist; der Waschvorgang kann beendet werden.

1.1. In einem **kontinuierlichen** Prozess wird bei Erreichung des Parameterwertes aus 1 die Zufuhr des Waschmediums beendet; der Filterkuchen wird weiterprozessiert.

1.2. In einem **Batch** Prozess wird das Ende des Waschprozesses mitgeteilt. Für die nächste Batchwäsche eines weiteren Filterkuchens kann ggf. die Waschmittelm enge entsprechend dem vordefinierten Parameter aus 1. angepasst (typischerweise reduziert) werden. Die Methode zur Anpassung der Waschmittelmenge wird weiter unten genauer beschrieben.

2. Wird der vordefinierte Parameterwert (siehe 1.) **nicht erreicht,** kann davon ausgegangen werden, dass der Filterkuchen nicht optimal ausgewaschen wurde; der Waschvorgang wird weitergeführt, indem.

2.1. In einem **kontinuierlichen** Prozess die Waschmittelzufuhr verlängert wird.

2.2. In einem **Batch** Prozess, kann für den bereits gewaschenen Kuchen eine zusätzliche Wäsche angeschlossen werden. Im nächsten Batch mit einem neuen Filterkuchen kann die Waschmittelmenge erhöht werden.

Wird der vordefinierte Parameterwert trotz der beschriebenen Maßnahmen (siehe 2.1. oder 2.2) nicht erreicht, ist eine Aufreinigung alleine durch Verdrängung der Mutterlauge unzureichend. Typischerweise wird die Waschstrategie geändert; es kann z.B. eine Anmaischwäsche (Suspensionswäsche) oder eine Kombination aus Verdrängungs- und Anmaischwäschen durchgeführt werden.

Die Messdatenanalyse umfasst bei einer Änderungsanalyse der Rohdaten oder der daraus berechneten Konzentrationswerte folgende Schritte:

3. Transfer der Messwerte der überwachten Parameter des Filtratstroms in das Auswertesystem über einen vordefinierten Zeitabschnitt des Filtrations- und Wäscheprozesses. Berechnung der ersten Ableitung einer aus den Messwerten erzeugten Kurve. Ändert sich die erste Ableitung (=Steigung) der Messkurve nicht mehr oder ist sie unter einem vordefinierten Wert, können folgende Maßnahmen ergriffen werden:

3.1. In einem kontinuierlichen Prozess wird die Zufuhr des Waschmediums beendet. Entsprechend der Grenzwertbetrachtung aus 1. (erreicht/nicht erreicht) werden weitere ggf. Maßnahmen ergriffen z.B. Änderung der Waschstrategie.

3.2. In einem Batch Prozess wird das Ende des Waschprozesses mitgeteilt. Für den nächsten Waschschritt wird ggf. die Waschmittelmenge angepasst (reduziert oder erhöht) entsprechend der Grenzwertbetrachtung aus 1.

In einer besonderen Ausführungsform des Verfahrens wird die Qualität der Wäsche aus den Messdaten mittels einer oder mehreren weiteren Datenanalysen ermittelt. Dafür wird die Steigung der Messwertkurve (zwischen zwei Messwerte z. B. zwischen Messwerte der Zeitstempel t-1 und t) bevorzugt im Abschnitt C berechnet. Die berechnete Steigung wird mit einem als zugelassenen vordefinierten Wertebereich (Arbeitsbereich) für die Steigung verglichen; dieser wurde typischerweise aus vorherigen Wäschen mit zufriedenstellender Qualität ermittelt. Mögliche Abweichungen und damit Störungen im Waschvorgang bzw. in der Effektivität der Wäsche liegen vor, wenn die Steigung im Laufe der Wäsche den Arbeitsbereich verlässt.

Mögliche Störungen liegen vor, wenn:

a) Die Steigung zu flach ist, verursacht z.B. durch Risse im Filterkuchen.
b) Die Steigung ungleichmäßig ist, verursacht z.B. durch Löcher oder Kanäle im Filterkuchen.

Durch die Betrachtung der Steigung wird Prozessverständnis bzw. Prozessmonitoring möglich, sodass geeignete Gegenmaßnahmen eingeleitet werden können. Diese können z.B. sein: Beachtung der (Unter)sättigung der Filterkuchens, Überprüfung des eingesetzten Filtermittels auf Fehlstellen, Glattstreichen des Filterkuchens etc.

Im Allgemeinen ist die Steigung gleichbedeutend mit der Waschgeschwindigkeit $\Delta$Konz/$\Delta$Zeit alternativ $\Delta$Messsignal/$\Delta$Zeit, wobei $\Delta$=Änderung ist. Dadurch sind Prozessoptimierungen möglich, z.B.

a) Eine erhöhte Steigung bedeutet eine erhöhte Waschgeschwindigkeit, die z.B durch einen erhöhten Druck erreicht werden kann. Daraus resultiert eine kürzere Waschzeit, wodurch die Taktzeit reduziert wird.
b) Eine verringerte Steigung bedeutet eine erhöhte Waschzeit. Dies erhöht die Diffusionszeit des Waschmediums in das Feststoff-Porensystem, wodurch die Wascheffektivität erhöht werden kann.

Werden Störungen erkannt, erlässt das System eine Warnung; ggf. beendet das System den Waschvorgang.

- Effektivität der Wäsche

In einer besonderen Ausführungsform des Verfahrens wird die Effektivität des Waschvorgangs mit folgenden Schritten ermittelt:

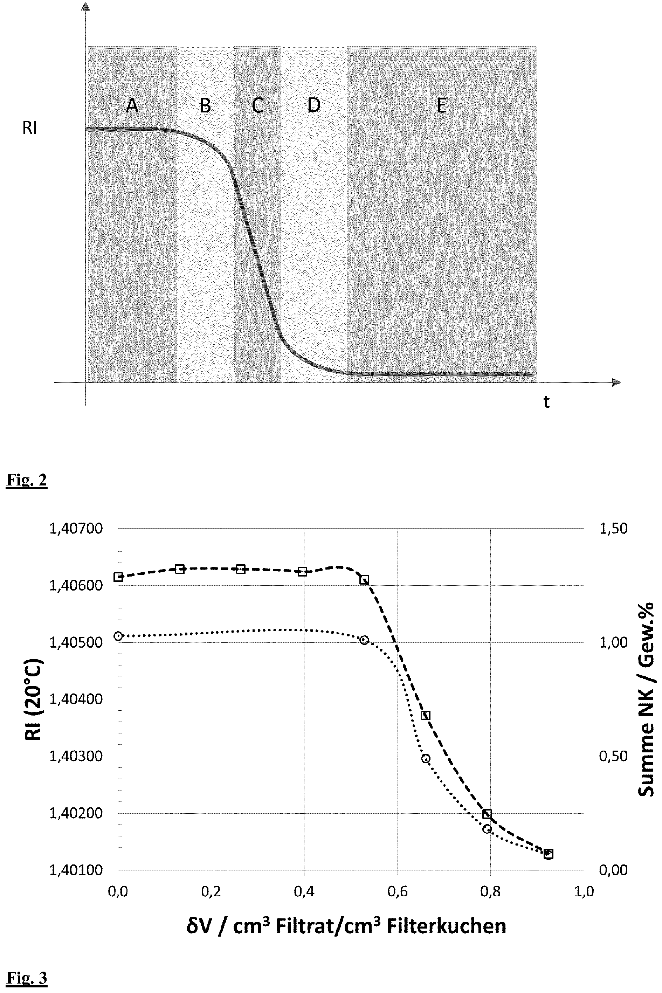

a) Aus der Messkurve wird ein Abschnitt C ermittelt (siehe Abbildung 2), in dem die Messkurve sich mit einer Steigung von mindestens oder gleich eines vordefinierten Werts X ändert.
b) Ein Steigungswert als durchschnittliche Steigung wird über den Abschnitt C aus a) berechnet,
c) Eine Variabilität der Steigung im Abschnitt C aus a) wird berechnet,
d) Ist der Steigungswert innerhalb des vordefinierten Arbeitsbereich und ist die Variabilität der Steigung kleiner X läuft der Waschvorgang effektiv, der Waschvorgang wird weitergeführt bis der Steigungswert einen vordefinierten Wert für eine ausreichende Waschqualität erreicht,
e) Ist der Steigungswert $\leq$ eines vordefinierten Minimalwerts (flache Steigung) und / oder ist die Variabilität des Steigungswertes hoch, ist eine Gradientenbildung bzw. Unstetigkeit im Kuchen zu vermuten. Eine Warnung wird ausgegeben und / oder der Filtrationsdruck erhöht.

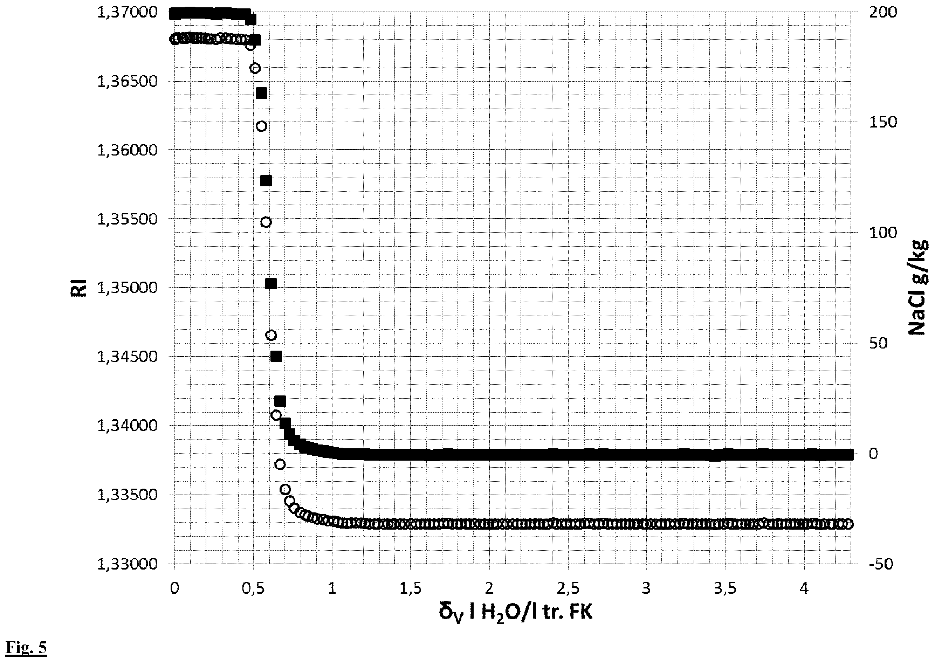

Die Bestimmung des optimalen Waschverhältnisses erfolgt aus der Analyse der Waschkurve (Messwert über Waschverhältnis Abb. 3 oder 5) für die folgenden Batches. Ändert sich der Messwert nicht mehr, ist das optimale Waschverhältnis, d. h. die optimale Waschmittelmenge überschritten.

In einer besonderen Ausführungsform des erfindungsgemäßen Verfahrens wird die für den Waschvorgang verbrauchte Waschmediummenge bis zum berechneten Ende des Waschvorgangs ermittelt und für den nächsten Waschvorgang als optimale Waschmediummenge festgelegt. Im Falle eines Batch-Waschvorgangs wird die neue Menge Waschmedium zum Waschen des Filterkuchens zugefügt. Bei einem kontinuierlichen Verfahren wird die Waschmediummenge online berechnetund z. B. eine Warnung im Falle der Überschreitung der optimalen Waschmediummenge gegeben.

Die Messwerte können sowohl online ausgewertet werden, als auch nachträglich in ihrer Gesamtheit betrachtet/interpretiert (Prozessoptimierung) werden.

Insbesondere kann durch die Messung im Filtratstrom aus einem Filterapparat zur Kuchenfiltration und die folgende Analyse der gewonnenen Messwerte eine produktspezifische Validierung der Qualität des Filterkuchens im Zusammenhang mit der Konzentration der Nebenkomponenten im Filtratstrom bzw. mit dem messbaren Summenparameter des Filtratstroms erreicht werden.

Durch das beschriebene Verfahren werden folgende Informationen über den Verlauf des Prozesses bereitgestellt:

- Einschätzung des Prozessfortschrittes,
- Erkennung eines Abbruch/Endpunktkriteriums
- Erkennung von Prozessstörungen z.B. unregelmäßige Filterkuchestruktur

    - Stabilität des Prozesses

    - Hinweise zur Optimierung der Waschmittelmenge

Aus diesen Informationen wird eine indirekte Filterkuchenanalytik durchgeführt.

In einer ersten Ausführungsform des erfindungsgemäßen Verfahrens wird die Bestimmung des Brechungsindex als Summensignal über die Nebenkomponenten verwendet.

Mit einem entsprechend in der Filtervorrichtung platzierten Messgerät wird online der Messwert, z. B. der Brechungsindex im Filtratstrom bestimmt. Das Messgerät wird bevorzugt im Filtratablauf 5 - entweder druckfrei oder ggf. in einer Druckleitung - installiert (Abb 1).

Der Messwert und seine Variation über die Zeit kann als Merkmal zur Qualitätskontrolle verwendet werden. Typischerweise wird der online gemessene Wert mit einer zuvor ermittelten Kalibrierfunktion zwischen Messwert und Nebenkomponenten/Produktqualität abgeglichen (Abb. 2).

Weiterer Gegenstand der Anmeldung ist ein Filterapparat umfassend eine Waschmediumzufuhr, ein Filterelement, ein Filtratablauf und eine Messvorrichtung zur Messung im Filtstratstrom sowie das im beigefügten Anspruchssatz definierten System zur Kontrolle eines Filtrations- und Waschvorgangs, wobei die Messvorrichtung zur Messung einer oder mehrere Parameter wie z.B. Brechungsindex-, Dichte-, Ultraschalllaufzeit-, pH-Wert-, Leitfähigkeit-, Redoxpotential- und / oder spektroskopische Eigenschaften des Filtratstroms ausgewählt ist. Erfindungsgemäß ist die Messvorrichtung im oder am Filtratablauf eingebracht. Typischerweise wird die Messvorrichtung in die Filtratleitung des Filterapparats eingebracht.

Bevorzugt umfasst der Filterapparat zusätzlich eine Messvorrichtung zur Messung der Filtratmasse. Typischerweise wird mit Hilfe einer Wage die Filtratmasse im Filtratsammelgefäß ermittelt/aufgezeichnet. Alternativ wird die Filtratmasse aus dem Volumenstrom/Massenstrom mit Hilfe eines Durchflussmessers ermittelt/aufgezeichnet.

Bevorzugt wird die in den Ansprüchen beschriebene Messung(en) des Filtratsromsparameters mit einer Messung der Filtratmasse kombiniert.

Geeignete Filtervorrichtung sind Nutschen, Zentrifugen, Büchnertrichter, Fritten, Filtertiegel, Trommelfilter, Scheibenfilter, Bandfilter und Filterpresse, ohne sich darauf zu begrenzen.

## Beispiel A zur qualitativen Beurteilung einer Feststoffwäsche:

In einem ersten Set von Experimenten wurde die Untersuchung der Waschfiltrate in einer Verdrängungswäsche mit Hilfe des Brechungsindex untersucht und wird beispielhaft am Produkt Sivanto dargestellt.

Hierfür wurden bei der Filtration/Wäsche zu definierten Zeitpunkten dem Filtratstrom Proben in Fraktionen entnommen. Mit einem Refraktometer (Abbemat300 der Firma Anton) Paar wurde der Brechungsindex off-line gemessen und mit dem Brechungsindex der Waschlösung verglichen (Fig. 3). Bei regulärem Prozessfortschritt näherte sich der Messwert dem Brechungsindex der Waschlösung an. Zunächst bestand das Filtrat aus Mutterlauge, weshalb zu Beginn ein Plateau im Verlauf des Brechungsindex zu sehen ist. Wird die Mutterlauge in der Verdrängungswäsche allmählich von Waschmedium verdrängt, sinkt der Brechungsindex bis er einen konstanten Wert erreicht. Dieser Wert erreicht optimaler Weise den des eingesetzten Waschmediums.

Damit konnte gezeigt werden, dass der Brechungsindex als Summensignal geeignet ist, um Konzentrationsabnahmen im Filtrat nachzuweisen, Abweichungen vom Erwartungswert bei der Konzentration und der Filtrationsrate pro Zeiteinheit können dargestellt und erkannt werden.

Eine Korrelation mit der Qualität des Filterkuchens ist am Einzelfall zu prüfen und war für Sivanto möglich. Proben aus dem Filtratstrom während der Wäsche und der Filterkuchen jeweils nach Ende der Wäschen (jeder Versuch wurde mit unterschiedlichen Mengen Waschmedium durchgeführt) wurden durch HPLC analysiert.

In weiteren Experimenten wurde ein Prozessrefraktometer in Filtratablauf des Laborversuchstands zur Filtration als online Messtechnik integriert. Dafür wurde ein ProzessRefraktometer des Typs PR-43 von KPatents mit einem Messbereich von nD 1,32-1,53 verwendet. Für die Laborversuche wurde ein Durchflussadapter verwendet.

**Beispiel B zur qualitativen und quantitativen Beurteilung einer Feststoffwäsche für Modelpartikel:**

i. Versuchsdurchführung:

Die Filtrations- und Waschversuche wurden gemäß VDIRichtlinie 2762 auf einem 100 cm$^2$ Labordruckfilter bei 0,2 bar Überdruck und Raumtemperatur durchgeführt. In der Filtratleitung wurde das Prozessrefraktometer (Abbemat300 der Firma Anton) integriert. Brechungsindex und Filtratmasse wurden zeitaufgelöst aufgenommen. Nach Versuchsende wurde die Höhe und Masse des Filterkuchens bestimmt.

Die Filtration wurde bei einer Sättigung S des Filterkuchens von S=1 beendet, Reinstwasser zur Wäsche vorsichtig auf den Filterkuchen geschichtet und anschließend die Wäsche und mechanische Entfeuchtung durchgeführt. Nach Versuchsende wurde der Brechungsindex des Mutterlaugenfiltrats und des Waschfiltrats mit einem Abbemat 300 von Anton Paar bei 23°C bestimmt.

Zur Umrechnung der (online) ermittelten Brechungsindices in NaCl Konzentrationen und Massen wurde eine Kalibriergerade mit dem offline Refraktometer aufgenommen.

Als Modellpartikel wurden gewaschene SiLibeads Glaskugeln Typ S0-50 $\mu$m (bezogen von Sigmund Lindner GmbH) verwendet. Die Feststoffkonzentration betrug 400 g/kg. Als Verunreinigung wurde NaCl in einer Konzentration von 200 g/kg verwendet. Die aufgegebene Suspensionsmenge betrug ca. 1000g, d.h. 120g NaCl wurden als gelöste Verunreinigung ins System gegeben. Für die Wäsche wurden 1192 g Reinstwasser verwendet (entspricht einem Waschverhältnis von 4,3 l Wasser/ l tr. Filterkuchen), um einen sehr sauberen Filterkuchen zu erhalten.

Getrockneter Filterkuchen wurde in Reinstwasser resuspendiert und ausgerührt. Nach Zentrifugation, wurde der Brechungsindex im Überstand bestimmt. Dieser entsprach dem Wert von Wasser. Zusätzlich wurde im Überstand freies Cl$^-$ mit Hilfe eines Küvettentests zu 0 bestimmt. Das heißt der gewaschene Filterkuchen enthielt in diesem Beispiel kein NaCl.

iii. Versuchsauswertung:

**• Online Analytik: qualitative Auswertung**

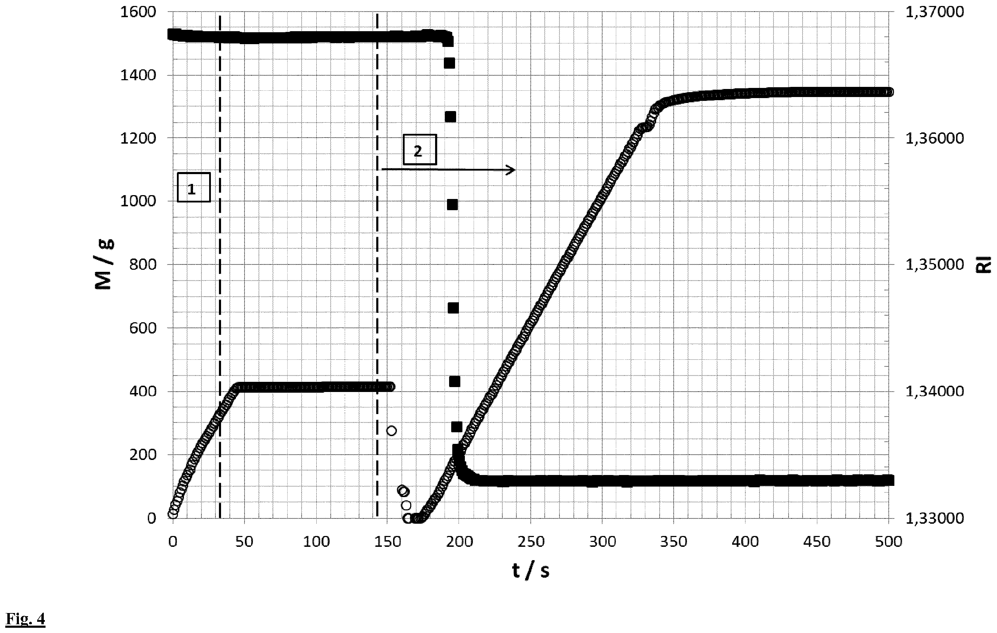

Bei der parallelen Aufnahme von Filtratmasse und Brechungsindex wird im Versuch der Verlauf gemäß Figur 4 beobachtet:

- Die Filtratmasse nimmt während der Filtration und Wäsche zu bevor sie während der Entfeuchtung des Filterkuchens am Versuchsende konstant bleibt. Der Brechungsindex bleibt während der Filtration konstant, da nur Mutterlauge den Filterkuchen verlässt. Bei der anschließenden Wäsche nimmt der Brechungsindex vom Wert der Mutterlauge auf den Wert des reinen Waschmediums ab.

Wird der Plateauwert des annähernd reinen Waschmediums erreicht, kann davon ausgegangen werden, dass der Filterkuchen durch die Verdrängungswäsche nicht weiter ausgewaschen werden kann. D.h. für eine weitere Aufreinigung muss - eine andere Waschstrategie wie z.B. Anmaischwäsche - geprüft werden. Ändert sich der Wert des Brechungsindex nicht mehr, kann die Wäsche beendet werden.

Werden die obigen Daten auf das Waschverhältnis bezogen, kann direkt die nötige Menge Waschmedium ermittelt werden (s. nachfolgende Beschreibung).

In Figur 5 ist der Verlauf des Brechungsindex (RI) über das Waschverhältnis darge stellt. Es ist deutlich zu erkennen, dass der konstante Messwert des Mutterlaugenfiltrats durch die zunehmende Wassermenge herabgesetzt wird. Am Ende der Wäsche wird ein Plateauwert erreicht.

Die Abnahme des RI und das Einpendeln auf einen konstanten Wert zeigt an, dass kein weiterer Wascheffekt mehr zu erzielen ist. D.h. auch mit größeren Waschverhältnis sen wird der Auswascheffekt des Filterkuchens nicht weiter verbessert. Diese rein qualitative Auswertung kann dazu genutzt werden, die Wäsche in diesem Beispiel bei einem Waschverhältnis von 1,5 zu beenden. Dies spart direkt Zeit und Kosten für Waschmedium. Durch die Aufnahme solcher Daten im Betrieb kann eine ausreichende Datengrundlage für Optimierungen hinsichtlich Waschzeit und Waschmediumverbrauch getroffen werden.

Eine quantitative Auswertung kann bei realen Produkten mit größerem Aufwand erfolgen. Für das Modellprodukt wird diese im Folgenden dargelegt.

• Online Analytik: **quantitative Auswertung**

Für die quantitative Auswertung der online Messdaten wird die Auftragung des RI und der Filtratmasse über die Zeit für Filtration und Wäsche gewählt (s. Figur 5). Für jeden Zeitabschnitt kann die Filtratmasse und NaCl Masse aus den aufgenommenen Daten über eine Kalibriergerade NaCl Konzentration-Brechungsindex berechnet werden.

$$m_{NaCl,1} = \left( m_{Filtrat,1} - m_{Filtrat,0} \right) * c_{NaCl,1}$$

Alternativ kann auch eine Integration der Kurve wie folgt durchgeführt werden:
Die Fläche unter der Kurve kann anhand der Trapezregel bestimmt werden, so dass für jeden Zeitabschnitt die bezogene Fläche in s*g/kg ermittelt werden kann:
Fläche im Zeitabschnitt: $A_1 = 0{,}5 * (t_1 - t_0) * (c_{NaCl,1} - C_{NaCl,0})$
Durch Bezug auf das Zeitintervall und die in diesem Zeitintervall aufgenommene Filtratmasse, kann die Masse NaCl im Zeitintervall bestimmt werden (s. Tabelle 1 und 2).

$$m_{NaCl,1} = \frac{A_1}{(t_1 - t_0)} * (m_{Filtrat,1} - m_{Filtrat,0})$$

Tabelle 1: Integration der Messdaten für Filtration

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 0,00 | 1,00 | 1,36823 | 12,4 | 12,4 | 200,2 | 197,7 | 197,7 | 2,46 |
| 1,00 | 1,00 | 1,36821 | 25,8 | 13,4 | 200,1 | 200,2 | 200,2 | 2,68 |
| 2,00 | 1,00 | 1,36824 | 41,2 | 15,4 | 200,3 | 200,2 | 200,2 | 3,08 |
| 3,00 | 1,00 | 1,36816 | 53,0 | 11,8 | 199,8 | 200,1 | 200,1 | 2,36 |
| 4,00 | 1,00 | 1,36813 | 66,1 | 13,1 | 199,7 | 199,7 | 199,7 | 2,62 |
| 5,00 | 1,00 | 1,36816 | 80,1 | 14,0 | 199,8 | 199,7 | 199,7 | 2,79 |
| 6,00 | 1,00 | 1,36812 | 90,8 | 10,7 | 199,6 | 199,7 | 199,7 | 2,14 |
| 7,00 | 1,00 | 1,36811 | 103,1 | 12,3 | 199,5 | 199,6 | 199,6 | 2,45 |
| 8,00 | 1,00 | 1,3681 | 115,8 | 12,7 | 199,5 | 199,5 | 199,5 | 2,54 |
| 9,00 | 1,00 | 1,36811 | 126,1 | 10,4 | 199,5 | 199,5 | 199,5 | 2,07 |
| 10,00 | 1,00 | 1,36812 | 134,6 | 8,5 | 199,6 | 199,6 | 199,6 | 1,69 |
| 11,00 | 1,00 | 1,36808 | 144,1 | 9,4 | 199,4 | 199,5 | 199,5 | 1,88 |
| 12,00 | 1,00 | 1,36806 | 152,9 | 8,8 | 199,3 | 199,3 | 199,3 | 1,76 |
| 13,00 | 1,00 | 1,36808 | 166,6 | 13,7 | 199,4 | 199,3 | 199,3 | 2,73 |
| 14,00 | 1,00 | 1,36805 | 176,0 | 9,5 | 199,2 | 199,3 | 199,3 | 1,89 |
| 15,00 | 1,00 | 1,36811 | 186,0 | 10,0 | 199,5 | 199,4 | 199,4 | 1,99 |
| 16,00 | 1,00 | 1,3681 | 194,8 | 8,7 | 199,5 | 199,5 | 199,5 | 1,74 |
| 17,00 | 1,00 | 1,36808 | 202,7 | 7,9 | 199,4 | 199,4 | 199,4 | 1,57 |
| 18,00 | 1,00 | 1,36803 | 211,1 | 8,4 | 199,1 | 199,2 | 199,2 | 1,68 |
| 19,00 | 1,00 | 1,36803 | 220,1 | 9,0 | 199,1 | 199,1 | 199,1 | 1,79 |
| 20,00 | 1,00 | 1,36802 | 228,3 | 8,2 | 199,0 | 199,1 | 199,1 | 1,63 |

(fortgesetzt)

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 21,00 | 1,00 | 1,36803 | 236,6 | 8,3 | 199,1 | 199,1 | 199,1 | 1,65 |
| 22,00 | 1,00 | 1,36804 | 243,7 | 7,2 | 199,2 | 199,1 | 199,1 | 1,43 |
| 23,00 | 1,00 | 1,36803 | 252,4 | 8,7 | 199,1 | 199,1 | 199,1 | 1,73 |
| 24,00 | 1,00 | 1,36803 | 258,0 | 5,6 | 199,1 | 199,1 | 199,1 | 1,12 |
| 25,00 | 1,00 | 1,36803 | 266,9 | 8,9 | 199,1 | 199,1 | 199,1 | 1,78 |
| 26,00 | 1,00 | 1,36803 | 273,8 | 6,9 | 199,1 | 199,1 | 199,1 | 1,37 |
| 27,00 | 1,00 | 1,36802 | 280,8 | 7,0 | 199,0 | 199,1 | 199,1 | 1,40 |
| 28,00 | 1,00 | 1,36803 | 289,3 | 8,5 | 199,1 | 199,1 | 199,1 | 1,70 |
| 29,00 | 1,00 | 1,36803 | 297,8 | 8,5 | 199,1 | 199,1 | 199,1 | 1,69 |
| 30,00 | 1,00 | 1,36803 | 305,2 | 7,4 | 199,1 | 199,1 | 199,1 | 1,47 |
| 31,00 | 1,00 | 1,36802 | 313,2 | 8,0 | 199,0 | 199,1 | 199,1 | 1,58 |
| 32,00 | 1,00 | 1,368 | 320,6 | 7,4 | 198,9 | 199,0 | 199,0 | 1,47 |
| 33,00 | 1,00 | 1,36797 | 328,4 | 7,9 | 198,8 | 198,8 | 198,8 | 1,56 |
| 34,00 | 1,00 | 1,368 | 335,3 | 6,8 | 198,9 | 198,8 | 198,8 | 1,36 |
| 35,00 | 1,00 | 1,36797 | 342,6 | 7,3 | 198,8 | 198,8 | 198,8 | 1,45 |
| 36,00 | 1,00 | 1,36803 | 350,1 | 7,5 | 199,1 | 198,9 | 198,9 | 1,49 |
| 37,00 | 1,00 | 1,36803 | 357,3 | 7,3 | 199,1 | 199,1 | 199,1 | 1,44 |
| 38,00 | 1,00 | 1,368 | 365,2 | 7,8 | 198,9 | 199,0 | 199,0 | 1,56 |
| 39,00 | 1,00 | 1,36795 | 373,2 | 8,0 | 198,6 | 198,8 | 198,8 | 1,59 |
| 40,00 | 1,00 | 1,36798 | 380,3 | 7,2 | 198,8 | 198,7 | 198,7 | 1,43 |
| 41,00 | 1,00 | 1,368 | 387,4 | 7,1 | 198,9 | 198,9 | 198,9 | 1,41 |
| 42,00 | 1,00 | 1,36797 | 393,4 | 5,9 | 198,8 | 198,8 | 198,8 | 1,18 |
| 43,00 | 1,00 | 1,36803 | 400,8 | 7,4 | 199,1 | 198,9 | 198,9 | 1,47 |
| 44,00 | 1,00 | 1,368 | 409,0 | 8,2 | 198,9 | 199,0 | 199,0 | 1,63 |
| 45,00 | 1,00 | 1,36794 | 411,4 | 2,4 | 198,6 | 198,8 | 198,8 | 0,48 |
| 46,00 | 1,00 | 1,36794 | 412,8 | 1,4 | 198,6 | 198,6 | 198,6 | 0,27 |
| 47,00 | 1,00 | 1,36794 | 413,4 | 0,6 | 198,6 | 198,6 | 198,6 | 0,13 |
| 48,00 | 1,00 | 1,36794 | 413,7 | 0,3 | 198,6 | 198,6 | 198,6 | 0,06 |
| 49,00 | 1,00 | 1,36794 | 414,0 | 0,3 | 198,6 | 198,6 | 198,6 | 0,06 |
| 50,00 | 1,00 | 1,36792 | 414,2 | 0,2 | 198,5 | 198,5 | 198,5 | 0,04 |
| 51,00 | 1,00 | 1,3679 | 414,2 | 0,0 | 198,4 | 198,4 | 198,4 | 0,00 |
| 52,00 | 1,00 | 1,36794 | 414,2 | 0,0 | 198,6 | 198,5 | 198,5 | 0,00 |
| Summe NaCl Filtration: 83 g | | | | | | | | |

Tabelle 2: Integration der Messdaten für Wäsche

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 172,00 | 1,00 | 1,36804 | 0,0 | 0,0 | 199,2 | 199,3 | 199,3 | 0,00 |

(fortgesetzt)

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 173,00 | 1,00 | 1,36805 | 0,0 | 0,0 | 199,2 | 199,2 | 199,2 | 0,00 |
| 174,00 | 1,00 | 1,36811 | 1,1 | 1,1 | 199,5 | 199,4 | 199,4 | 0,22 |
| 175,00 | 1,00 | 1,36811 | 5,7 | 4,6 | 199,5 | 199,5 | 199,5 | 0,91 |
| 176,00 | 1,00 | 1,36811 | 13,5 | 7,8 | 199,5 | 199,5 | 199,5 | 1,56 |
| 177,00 | 1,00 | 1,36813 | 19,9 | 6,4 | 199,7 | 199,6 | 199,6 | 1,27 |
| 178,00 | 1,00 | 1,36817 | 26,0 | 6,1 | 199,9 | 199,8 | 199,8 | 1,21 |
| 179,00 | 1,00 | 1,36812 | 33,1 | 7,2 | 199,6 | 199,7 | 199,7 | 1,43 |
| 180,00 | 1,00 | 1,36811 | 38,2 | 5,0 | 199,5 | 199,6 | 199,6 | 1,00 |
| 181,00 | 1,00 | 1,36811 | 46,7 | 8,5 | 199,5 | 199,5 | 199,5 | 1,70 |
| 182,00 | 1,00 | 1,36811 | 52,9 | 6,2 | 199,5 | 199,5 | 199,5 | 1,24 |
| 183,00 | 1,00 | 1,3681 | 59,4 | 6,6 | 199,5 | 199,5 | 199,5 | 1,31 |
| 184,00 | 1,00 | 1,36809 | 63,6 | 4,2 | 199,4 | 199,5 | 199,5 | 0,83 |
| 185,00 | 1,00 | 1,36804 | 72,2 | 8,6 | 199,2 | 199,3 | 199,3 | 1,71 |
| 186,00 | 1,00 | 1,36811 | 79,9 | 7,7 | 199,5 | 199,3 | 199,3 | 1,54 |
| 187,00 | 1,00 | 1,36812 | 90,9 | 11,0 | 199,6 | 199,6 | 199,6 | 2,19 |
| 188,00 | 1,00 | 1,36809 | 100,2 | 9,3 | 199,4 | 199,5 | 199,5 | 1,86 |
| 189,00 | 1,00 | 1,36803 | 108,6 | 8,3 | 199,1 | 199,3 | 199,3 | 1,66 |
| 190,00 | 1,00 | 1,36803 | 117,0 | 8,4 | 199,1 | 199,1 | 199,1 | 1,68 |
| 191,00 | 1,00 | 1,36799 | 125,5 | 8,5 | 198,9 | 199,0 | 199,0 | 1,69 |
| 192,00 | 1,00 | 1,36763 | 133,8 | 8,3 | 196,8 | 197,8 | 197,8 | 1,65 |
| 193,00 | 1,00 | 1,36597 | 142,3 | 8,5 | 187,4 | 192,1 | 192,1 | 1,63 |
| 194,00 | 1,00 | 1,36174 | 153,2 | 10,9 | 163,3 | 175,3 | 175,3 | 1,91 |
| 195,00 | 1,00 | 1,35479 | 161,6 | 8,5 | 123,8 | 143,6 | 143,6 | 1,22 |
| 196,00 | 1,00 | 1,34658 | 170,0 | 8,3 | 77,1 | 100,4 | 100,4 | 0,84 |
| 197,00 | 1,00 | 1,3408 | 179,9 | 9,9 | 44,2 | 60,7 | 60,7 | 0,60 |
| 198,00 | 1,00 | 1,33723 | 186,3 | 6,5 | 23,9 | 34,1 | 34,1 | 0,22 |
| 199,00 | 1,00 | 1,33544 | 195,9 | 9,6 | 13,7 | 18,8 | 18,8 | 0,18 |
| 200,00 | 1,00 | 1,33457 | 204,0 | 8,1 | 8,8 | 11,3 | 11,3 | 0,09 |
| 201,00 | 1,00 | 1,33406 | 211,9 | 7,9 | 5,9 | 7,3 | 7,3 | 0,06 |
| 202,00 | 1,00 | 1,33376 | 221,4 | 9,6 | 4,2 | 5,0 | 5,0 | 0,05 |
| 203,00 | 1,00 | 1,33355 | 230,6 | 9,2 | 3,0 | 3,6 | 3,6 | 0,03 |
| 204,00 | 1,00 | 1,33348 | 236,5 | 5,9 | 2,6 | 2,8 | 2,8 | 0,02 |
| 205,00 | 1,00 | 1,33339 | 244,9 | 8,4 | 2,1 | 2,3 | 2,3 | 0,02 |
| 206,00 | 1,00 | 1,33331 | 252,8 | 7,9 | 1,6 | 1,8 | 1,8 | 0,01 |
| 207,00 | 1,00 | 1,33323 | 263,6 | 10,8 | 1,2 | 1,4 | 1,4 | 0,01 |
| 208,00 | 1,00 | 1,33316 | 271,5 | 7,9 | 0,8 | 1,0 | 1,0 | 0,01 |
| 209,00 | 1,00 | 1,33309 | 281,7 | 10,2 | 0,4 | 0,6 | 0,6 | 0,01 |
| 210,00 | 1,00 | 1,33307 | 289,7 | 8,0 | 0,3 | 0,3 | 0,3 | 0,00 |

(fortgesetzt)

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 211,00 | 1,00 | 1,333 | 297,7 | 8,0 | -0,1 | 0,1 | 0,1 | 0,00 |
| 212,00 | 1,00 | 1,33299 | 305,8 | 8,1 | -0,2 | -0,2 | -0,2 | 0,00 |
| Summe NaCl Wäsche: 33g | | | | | | | | |

Werden alle Massen NaCl aus den einzelnen Abschnitten addiert - also die Messkurven integriertergibt sich die ausgewaschene Masse NaCl im gesamten Versuch. Diese beläuft sich in diesem Beispiel auf 116 g NaCl, was einer Abweichung von ca. 3% von der eingesetzten Menge NaCl entspricht.

**• Massenbilanz aus offline Bestimmungen:**

Um die Massenbilanz aus den online Messungen zu überprüfen, wurden die Filtratmassen und die Brechungsindices in den gesammelten Filtraten bestimmt. Hieraus lässt sich eine Massenbilanz berechnen. Im dargestellten Versuch wurden 120 g NaCl eingesetzt. Es wurden 414 g Mutterlaugenfiltrat mit einer Konzentration von 200 g/kg NaCl und 1347 g Waschfiltrat mit einer Konzentration von 24 g/kg NaCl aufgefangen. Daraus ergeben sich 83 g NaCl gelöst im Mutterlaugenfiltrat und 32 g NaCl gelöst im Waschfiltrat. Da im Filterkuchen kein NaCl nachzuweisen war, konnten 115g NaCl in den Filtraten messtechnisch wiedergefunden werden.

**• Aussagen zu Qualität der durchgeführten Wäsche**

Der Brechungsindex nimmt während der Wäsche vom (Anfangs-)Wert der Mutterlauge auf einen niedrigeren (Plateau)wert am Ende der Wäsche ab. Die Kurve fällt damit mit einer bestimmten Steigung. Ändert sich diese Steigung, kann daraus auf die Qualität der Wäsche geschlossen werden.

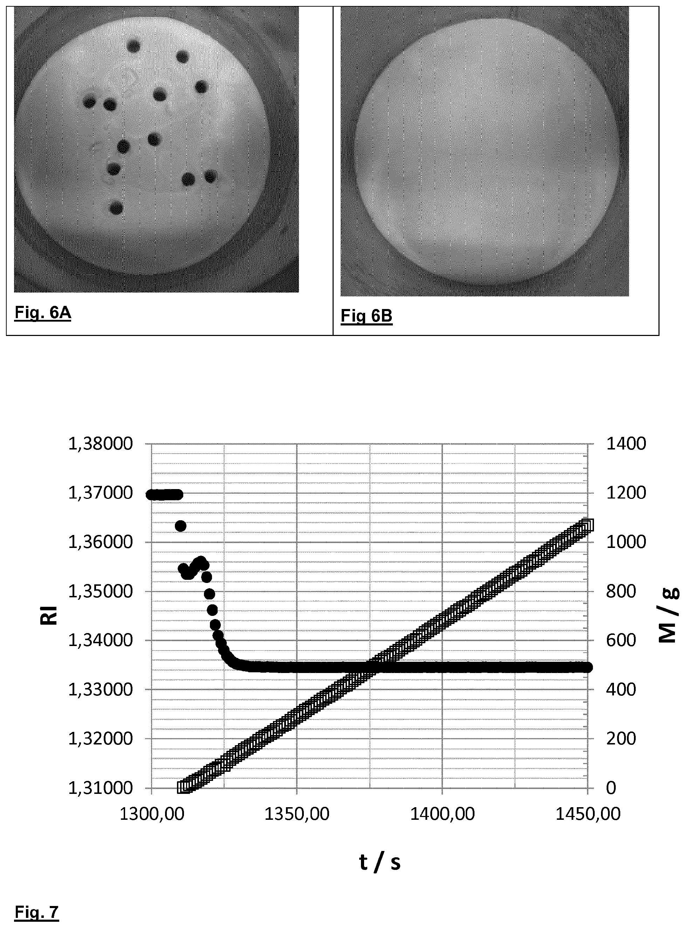

Im Folgenden wird ein Beispiel mit dem oben beschriebenen Modellsystem dargelegt:
In die aufgegebene Suspension wurden Stäbe gesteckt, um künstlich Kanäle im Filterkuchen zu erzeugen. Der Filterkuchen wurde nach der Mutterlaugenfiltration entfeuchtet (Figur 6A). Abbildung 7 zeigt den Verlauf und insbesondere den Wiederanstieg des Brechungsindex. Dies lässt darauf schließen, dass die Waschfront nicht homogen durch den Filterkuchen verläuft, sondern sich Unstetigkeiten - hier Kanäle - gebildet haben. Dies würde man allein durch eine visuelle Inspektion des Filterkuchens nach der Wäsche nicht erkennen, wie in Figur 6B zu erkennen ist. Hier können bei einer Inspektion des Filterkuchens von oben, wie es technisch möglich ist, keine Risse, Kanäle, etc. erkannt werden, die sich im Inneren des Filterkuchens verbergen.

Beschreibung der Figuren:

Fig. 1: Schematische Darstellung einer Drucknutsche
1 Drucknutsche, 2 Filterkuchen, 3 Messgerät (z.B. Beispiel RI)

Fig. 2: Trenddarstellung des Messwertes (RI) über die Zeit (t) unterteilt in Prozessphasen:
A- Verdrängung der Mutterlauge , B- Zwischenbereich , C- Zugelassener Bereich, D-Diffusionsbereich, E- Ende des Wascheffekts.

Fig. 3: Vergleich Brechungsindex (□) und Summe der Nebenkomponenten (○) für das Produkt Sivanto. Der Brechungsindex von reinem Butanol beträgt bei 20°C 1,39932. (Beispiel A).

Fig. 4: Filtratmasse M (○) und Brechungsindex RI (■) als Funktion der Zeit t. Bereich 1: Filtration; Bereich 2:Wäsche.

Fig. 5: NaCl Konzentration (■) und Brechungsindex RI (○) als Funktion des Waschverhältnisses.

Fig. 6A: Filterkuchen mit Kanälen, entfeuchtet nach Mutterlaugenfiltration.

Fig. 6B: Filterkuchen nach mechanischer Entfeuchtung nach Wäsche.

Fig. 7: ☐ Masse (M) und • Brechungsindex (RI) als Funktion der Zeit (t).

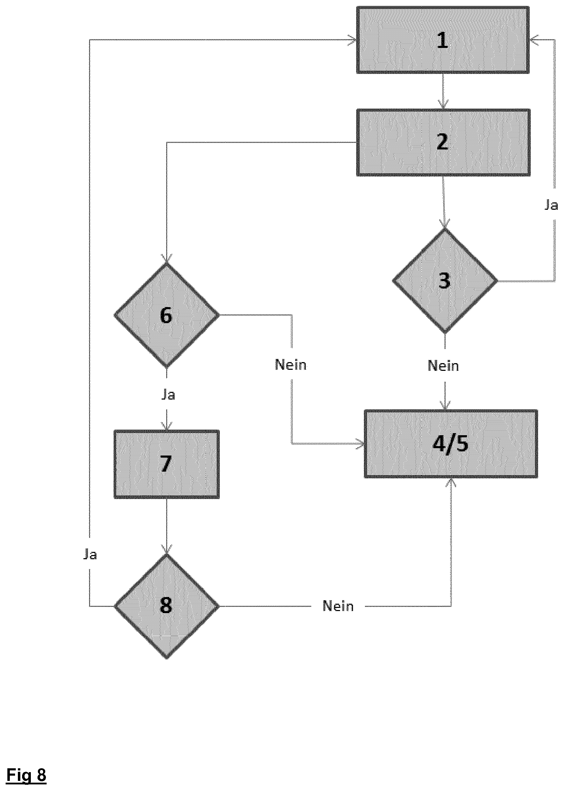

Fig. 8: Blockdiagramm zum Verfahren zur Kontrolle des Waschvorgangs

1 - Input von Messdaten
2 - Berechnung der ersten Ableitung
3 - Erste Ableitung > 0 oder größer als ein vordefinierter Wert?
4 - Ende des Waschvorgangs
5 - Fehlermeldung
6 - Erste Ableitung innerhalb eines vordefinierten Bereichs C?
7 - Berechnung der durchschnittlichen Steigung und Variabilität (Schritte e-g)
8 - Durchschnittliche Steigung und Variabilität innerhalb der vordefinierten Bereiche?

**Patentansprüche**

**1.** Verfahren zur Kontrolle eines Filtrations- und Waschvorgangs eines Schüttgutfeststoffs in einem Filterapparat zur Kuchenfiltration, wobei

- der Filterapparat eine Waschmediumzufuhr, ein Filterelement zur Kuchenfiltration, ein Filtratablauf zur Abfuhr eines Filtratstroms, und, im oder am Filtratablauf, mindestens eine Messvorrichtung zur Messung von einem oder mehrere Parameterwerte des Filtratstroms aufweist,
- während des Filter- und Waschvorgangs das Schüttgutfeststoff in einem Suspensionsmedium mit Hilfe eines Filterelements zur Kuchenfiltration als Kuchen von dem Suspensionsmedium getrennt wird, das Suspensionsmedium in Form eines Filtratstroms in einen Filtratablauf abgeführt wird, und die Messvorrichtung mindestens einen oder mehrere Parameterwerte des Filtratstroms über die Zeit des Waschvorgangs misst, **dadurch gekennzeichnet, dass** eine Computer-implementierte Änderungsanalyse der gemessenen Parameterwerte über die Zeit durchgeführt wird, aus dieser Änderungsanalyse, das Ende des Waschvorgangs und / oder die Effektivität des Waschvorgangs ermittelt wird, und die Änderungsanalyse zur Beendung des Waschvorgangs verwendet wird,
- wobei die Parameter des Filtratstroms aus der Gruppe umfassend Brechungsindex, Dichte, Ultraschalllaufzeit, Redox-Potential sowie spektroskopische Summeneigenschaften und/oder stoffspezifischen Eigenschaften einer oder mehreren Haupt- oder Nebenkomponente selektiert werden, und
- wobei das Ende des Waschvorgangs mit folgenden Schritten ermittelt wird:

a) Bereitstellung der gemessenen Parameterwerte an ein Auswertesystem;
b) Berechnung der ersten Ableitung einer Messkurve zwischen den Messdaten zu den Zeitpunkten t-1 und t;
c) beträgt die erste Ableitung aus b) mehr als null bzw. mehr als ein vordefinierter Wert für die Ableitung der Messkurve, bei dem das Verfahren als beendet gelten soll, wird der Waschvorgang weitergeführt; Schritt b) wird für eine weitere Messkurve wiederholt;
d) beträgt die erste Ableitung aus b) null, ist sie kleiner oder gleich dem vordefinierten Wert, wird der Waschvorgang beendet und optional das Ende des Waschvorgangs über eine Nutzeroberfläche mitgeteilt; und / oder

- wobei die Effektivität des Waschvorgangs mit folgenden Schritten ermittelt wird:

a. Transfer der Messwerte der Messdaten in das Auswertesystem über einen vordefinierten Zeitabschnitt des Waschvorgangs;
b. Berechnung der ersten Ableitung einer Messkurve zwischen den Messdaten zu den Zeitpunkten t-1 und t;
c. Vergleich der ersten Ableitung mit einem als zugelassenen vordefinierten Wertebereich für die erste Ableitung, in dem der Waschvorgang als effektiv gilt;
d. Beendung des Waschvorgangs und / oder Meldung der Abweichung über eine Nutzeroberfläche falls die erste Ableitung sich außerhalb des vordefinierten Wertebereich aus c) befindet;
alternativ oder zusätzlich zu Schritt d),
e. Berechnung eines Abschnitts C, in dem die erste Ableitung sich innerhalb des vordefinierten Wertebereich aus c) befindet;
f. Berechnung eines Steigungswerts als durchschnittliche Steigung über den Abschnitt C aus e);
g. Berechnung einer Variabilität des Steigungswerts über den Abschnitt C aus e);

h. Ist der Steigungswert aus f) innerhalb eines vordefinierten Arbeitsbereichs für den Steigungswert und ist die Variabilität der Steigung aus g) kleiner oder gleich einer vordefinierten Toleranzgrenze für die Variabilität, bei der der Waschvorgang als effektiv gilt, wird der Waschvorgang weitergeführt;

i. Befindet sich der Steigungswert aus f) außerhalb des vordefinierten Arbeitsbereichs für den Steigungswert und / oder die Variabilität des Steigungswertes aus g) über die vordefinierte Toleranzgrenze für die Variabilität wird eine Warnung ausgegeben und / oder der Waschvorgang beendet.

2. Verfahren nach Anspruch 1, wobei der Brechungsindex und / oder die Dichte des Filtratstroms gemessen werden.

3. Verfahren nach einem der Ansprüche 1 bis 2, wobei die Parameterwerte über die Zeit als Messdaten in ein Archivierungsmodul zur Speicherung der Messdaten übertragen und mit einem Zeitstempel t gespeichert werden.

4. Verfahren nach Anspruch 1, in dem die für den Waschvorgang verbrauchte Waschmediummenge bis zum Ende des Waschvorgangs ermittelt wird und für den nächsten Waschvorgang als optimale Waschmediummenge festgelegt wird.

5. Verfahren nach einem der Ansprüche 1 bis 4, wobei das Verfahren zur Online Kontrolle des Waschvorgangs verwendet wird.

6. Verfahren nach einem der Ansprüche 1 bis 4, wobei mindestens eine Konzentration von mindestens einer Komponente im Filtratstrom und / oder mindestens einem messbaren Summenparameter des Filtratstroms ermittelt wird.

7. System zur Kontrolle eines Filtrations- und Waschvorgangs eines Schüttgutfeststoffs in einem Filterapparat zur Kuchenfiltration, wobei das System umfasst:

- ein Archivierungsmodul konfiguriert für die Speicherung von Parameterwerten eines Filtratstroms mit einem Zeitstempel t übertragen aus mindestens einer Messvorrichtung im oder am einem Filtratablauf des Filterapparats über die Zeit des Filtrations- und Waschvorgangs und für die Weitergabe der Messwerte an ein Auswertesystem,

- das Auswertesystem, das mit dem Archivierungsmodul verbunden ist und zur Durchführung des Verfahrens nach einem der Ansprüche 1 bis 7 konfiguriert ist, um Änderungen der Parameterwerte über die Zeit zu analysieren, und aus dieser Änderungsanalyse das Ende des Filtrations- und Waschvorgangs und / oder die Effektivität des Waschvorgangs zu ermitteln,

- Ein Element zur Erteilung eines Steuer-Befehls zur Beendigung des Filtrations- und Waschvorgangs und/oder

- Ein Element zur Anzeige über das Ende des Filtrations- und Waschvorgangs und / oder die Effektivität des Waschvorgangs.

8. Filterapparat umfassend eine Waschmediumzufuhr, ein Filterelement zur Kuchenfiltration und ein Filtratablauf, mindestens eine Messvorrichtung zur Messung von Parameterwerten im Filtratstrom, die im oder am dem Filtratablauf eingebracht ist und das System nach Anspruch 7.

9. Filterapparat gemäß Anspruch 8, wobei die Messvorrichtung zur Messung einer oder mehrerer Parameter ausgewählt aus der Gruppe bestehend aus Brechungsindex-, Dichte-, Ultraschalllaufzeit-, pH-Wert-, Leitfähigkeit-, Redoxpotential- und / oder spektroskopische Eigenschaften des Filtratstroms als Summenparameter alternativ mindestens eines repräsentativen Bestandteils im Filtratstrom messen kann.

10. Filterapparat nach Anspruch 8 oder 9 ausgewählt aus der Gruppe umfassend Nutschen, Zentrifugen, Büchnertrichter, Fritten, Filtertiegel, Trommelfilter, Scheibenfilter, Bandfilter und Filterpresse.

11. Filterapparat nach Anspruch 8, wobei der Filterapparat eine steuerbare Waschmediumzufuhr aufweist, die Befehle zur Öffnung oder Schließung der Waschmediumzufuhr empfangen kann.

**Claims**

1. Method of monitoring a filtration and washing operation on a solid-state bulk material in a filter apparatus for cake filtration, wherein

- the filter apparatus has a wash medium feed, a filter element for cake filtration, a filtrate outlet for removal of a filtrate stream and, in or on the filtrate outlet, at least one measuring apparatus for measuring one or more parameter values of the filtrate stream,

- during the filtering and washing operation, the solid-state bulk material in a suspension medium is separated from the suspension medium in the form of a cake with the aid of a filter element for cake filtration, the suspension medium is led off in the form of a filtrate stream into a filtrate outlet, and the measuring apparatus measures at least one or more than one parameter value of the filtrate stream over the period of the washing operation,

**characterized in that** a computer-implemented change analysis of the parameter values measured is conducted over the period of time, this change analysis is used to ascertain the end of the washing operation and/or the effectiveness of the washing operation, and the change analysis is used for ending of the washing operation,

- wherein the parameters of the filtrate stream are selected from the group comprising refractive index, density, ultrasound transit time, redox potential and cumulative spectroscopic properties and/or substancespecific properties of one or more main or secondary components, and

- wherein the end of the washing operation is ascertained by the following steps:

a) providing the parameter values measured to an evaluation system;

b) calculating the first derivative of a measurement curve between the measurement data at the times t-1 and t;

c) if the first derivative from b) is more than zero or more than a predefined value for the derivative of the measurement curve at which the method is considered to have ended, the washing operation is continued; step b) is repeated for a further measurement curve;

d) if the first derivative from b) is zero, if it is less than or equal to the predefined value, the washing operation is ended and the end of the washing operation is optionally communicated via a user interface;

and/or

- wherein the effectiveness of the washing operation is ascertained by the following steps:

a. transferring the measurement values of the measurement data to the evaluation system over a predefined period of time in the washing operation;

b. calculating the first derivative of a measurement curve between the measurement data at the times t-1 and t;

c. comparing the first derivative with an approved predefined range of values for the first derivative in which the washing operation is considered to be effective;

d. ending the washing operation and/or giving notice of the variance via a user interface if the first derivative is outside the predefined range of values from c);

alternatively or additionally to step d),

e. calculating a period C in which the first derivative is within the predefined range of values from c);

f. calculating a slope value as the average slope over the period C from e);

g. calculating a variability of the slope value over the period C from e);

h. if the slope value from f) is within a predefined working range for the slope value and the variability of the slope from g) is less than or equal to a predefined tolerance limit for the variability at which the washing operation is considered to be effective, the washing operation is continued;

i. if the slope value from f) is outside the predefined working range for the slope value and/or the variability of the slope value from g) is above the predefined tolerance limit for the variability, a warning is issued and/or the washing operation is ended.

2. Method according to Claim 1, wherein the refractive index and/or the density of the filtrate stream is measured.

3. Method according to either of Claims 1 and 2, wherein the parameter values over the period of time are transmitted as measurement data to an archiving module for storage of the measurement data and stored with a timestamp t.

4. Method according to Claim 1, in which the amount of wash medium consumed for the washing operation until the end of the washing operation is ascertained and fixed as the optimal amount of wash medium for the next washing operation.

5. Method according to any of Claims 1 to 4, wherein the method is used for online monitoring of the washing operation.

6. Method according to any of Claims 1 to 4, wherein at least one concentration of at least one component in the filtrate stream and/or at least one measurable cumulative parameter of the filtrate stream is ascertained.

7. System for monitoring a filtration and washing operation on a solid-state bulk material in a filter apparatus for cake filtration, wherein the system comprises:

- an archiving module configured for the storage of parameter values of a filtrate stream with a timestamp t transmitted from at least one measurement apparatus in or on a filtrate outlet of the filter apparatus over the period of the filtration and washing operation and for the transfer of the measurement values to an evaluation system,
- the evaluation system connected to the archiving module and configured to perform the method according to any of Claims 1 to 7, in order to analyse changes in the parameter values over the period of time, and to use this change analysis to ascertain the end of the filtration and washing operation and/or the effectiveness of the washing operation,
- an element for issuing a control command for ending of the filtration and washing operation and/or
- a display element for the end of the filtration and washing operation and/or the effectiveness of the washing operation.

8. Filter apparatus comprising a wash medium feed, a filter element for cake filtration and a filtrate outlet, at least one measurement apparatus for measurement of parameter values in the filtrate stream, installed in or on the filtrate outlet, and the system according to Claim 7.

9. Filter apparatus according to Claim 8, wherein the measurement apparatus can measure one or more parameters selected from the group consisting of refractive index, density, ultrasound transit time, pH, conductivity, redox potential and/or spectroscopic properties of the filtrate stream as cumulative parameters, or alternatively of at least one representative constituent, in the filtrate stream.

10. Filter apparatus according to Claim 8 or 9, selected from the group consisting of suction filters, centrifuges, Büchner funnels, frits, filter crucible, drum filter, disk filter, belt filter and filter press.

11. Filter apparatus according to Claim 8, wherein the filter apparatus has a controllable wash medium feed that can receive commands for opening or closing of the wash medium feed.

## Revendications

1. Procédé de contrôle d'un processus de filtration et de lavage d'une matière solide en vrac dans un appareil de filtration pour la filtration de tourteaux, dans lequel

- l'appareil de filtration comprend une alimentation en agent de lavage, un élément filtrant pour la filtration du tourteau, une évacuation du filtrat pour l'évacuation d'un flux de filtrat et, dans ou sur l'évacuation du filtrat, au moins un dispositif de mesure pour mesurer une ou plusieurs valeurs de paramètres du flux de filtrat,
- pendant le processus de filtration et de lavage, les matières solides en vrac dans un milieu de suspension sont séparées du milieu de suspension sous forme de tourteau au moyen d'un élément filtrant pour la filtration du tourteau, le milieu de suspension est évacué sous forme d'un flux de filtrat dans une évacuation de filtrat, et le dispositif de mesure mesure au moins une ou plusieurs valeurs paramétriques du flux de filtrat pendant la durée du processus de lavage, **caractérisé en ce qu'**une analyse des variations des valeurs des paramètres mesurés dans le temps est effectuée par ordinateur, la fin du processus de lavage et/ou l'efficacité du processus de lavage sont déterminées à partir de cette analyse des variations, et l'analyse des variations est utilisée pour mettre fin au processus de lavage,
- les paramètres du flux de filtrat étant sélectionnés dans le groupe comprenant l'indice de réfraction, la densité, le temps de transit ultrasonore, le potentiel redox ainsi que les propriétés spectroscopiques globales et/ou les propriétés spécifiques à la substance d'un ou plusieurs composants principaux ou secondaires, et
- la fin du processus de lavage étant déterminée par les étapes suivantes :

a) transmission des valeurs des paramètres mesurés à un système d'évaluation ;
b) calcul de la dérivée première d'une courbe de mesure entre les données de mesure aux instants t-1 et t ;
c) si la première dérivée de b) est supérieure à zéro ou supérieure à une valeur prédéfinie pour la dérivée de la courbe de mesure, à laquelle la procédure doit être considérée comme terminée, le processus de lavage se poursuit ; l'étape b) est répétée pour une autre courbe de mesure ;

d) si la dérivée première de b) est nulle, ou si elle est inférieure ou égale à la valeur prédéfinie, le processus de lavage est terminé et la fin du processus de lavage est optionnellement communiquée via une interface utilisateur ;
et/ou

- l'efficacité du processus de lavage étant déterminée par les étapes suivantes :

a. transfert des valeurs de mesure des données de mesure dans le système d'évaluation sur une période prédéfinie du processus de lavage ;
b. calcul de la dérivée première d'une courbe de mesure entre les données de mesure aux instants t-1 et t ;
c. comparaison de la dérivée première avec une plage de valeurs prédéfinie autorisée pour la dérivée première, dans laquelle le processus de lavage est considéré comme efficace ;
d. fin du processus de lavage et/ou signalement de l'écart via une interface utilisateur si la dérivée première se situe en dehors de la plage de valeurs prédéfinie en c) ;
en alternative ou en complément de l'étape d),
e. calcul d'un segment C dans lequel la dérivée première se situe dans la plage de valeurs prédéfinie en c) ;
f. calcul d'une valeur de gradient en tant que gradient moyen sur la section C à partir de e) ;
g. calcul d'une variabilité de la valeur de gradient sur la section C à partir de e) ;
h. si la valeur du gradient obtenu en f) se situe dans une gamme de travail prédéfinie pour la valeur du gradient et si la variabilité du gradient obtenue en g) est inférieure ou égale à une limite de tolérance prédéfinie pour la variabilité, le processus de lavage est considéré comme efficace et le processus de lavage se poursuit ;
i. si la valeur du gradient obtenue en f) se situe en dehors de la plage de travail prédéfinie pour la valeur du gradient et/ou si la variabilité de la valeur du gradient obtenue en g) dépasse la limite de tolérance prédéfinie pour la variabilité, un avertissement est émis et/ou le processus de lavage est interrompu.

2. Procédé selon la revendication 1, dans lequel l'indice de réfraction et/ou la densité du flux de filtrat sont mesurés.

3. Procédé selon l'une des revendications 1 à 2, dans lequel les valeurs de paramètres sont transférées dans le temps sous forme de données de mesure dans un module d'archivage pour le stockage des données de mesure et sont stockées avec un horodatage t.

4. Procédé selon la revendication 1, dans lequel la quantité d'agent de lavage consommée pour le processus de lavage est déterminée jusqu'à la fin du processus de lavage et est définie comme quantité optimale d'agent de lavage pour le processus de lavage suivant.

5. Procédé selon l'une des revendications 1 à **4,** dans lequel le procédé est utilisé pour commander en ligne le processus de lavage.

6. Procédé selon l'une des revendications 1 à **4,** dans lequel au moins une concentration d'au moins un composant dans le flux de filtrat et/ou au moins un paramètre total mesurable du flux de filtrat est déterminé.

7. Système de contrôle d'un processus de filtration et de lavage d'une matière solide en vrac dans un appareil de filtration pour la filtration de tourteaux, le système comprenant :

- un module d'archivage conçu pour stocker les valeurs des paramètres d'un flux de filtrat avec un horodatage t transmis par au moins un dispositif de mesure dans ou sur un flux de filtrat de l'appareil de filtration pendant la durée du processus de filtration et de lavage, et pour transmettre les valeurs mesurées à un système d'évaluation,
- le système d'évaluation, qui est connecté au module d'archivage et qui est configuré pour mettre en œuvre le procédé selon l'une des revendications 1 à 7, afin d'analyser les modifications des valeurs des paramètres au fil du temps, et de déterminer, à partir de cette analyse des modifications, la fin du processus de filtration et de lavage et/ou l'efficacité du processus de lavage,
- un élément permettant de donner un ordre de commande pour mettre fin au processus de filtration et de lavage, et/ou
- un élément permettant d'afficher la fin du processus de filtration et de lavage et/ou l'efficacité du processus de lavage.

8. Appareil de filtration comprenant une alimentation en agent de lavage, un élément filtrant pour la filtration du tourteau et une évacuation du filtrat, au moins un dispositif de mesure pour mesurer les valeurs des paramètres dans le flux de filtrat, qui est inséré dans ou sur l'évacuation du filtrat, et le système selon la revendication 7.

9. Appareil de filtration selon la revendication 8, dans lequel le dispositif de mesure est apte à mesurer un ou plusieurs paramètres choisis dans le groupe constitué par l'indice de réfraction, la densité, le temps de transit ultrasonore, le pH, la conductivité, le potentiel redox et/ou les propriétés spectroscopiques du flux de filtrat en tant que paramètres cumulés, ou en variante au moins un composant représentatif du flux de filtrat.

10. Appareil de filtration selon la revendication 8 ou la revendication 9, choisi dans le groupe comprenant les filtres Nutsche, les centrifugeuses, les entonnoirs Büchner, les filtres frittés, les creusets filtrants, les filtres à tambour, les filtres à disques, les filtres à bande et les filtres-presses.

11. Appareil de filtration selon la revendication 8, l'appareil de filtration comprenant une alimentation en milieu de lavage apte à être commandée et apte à recevoir des ordres d'ouverture ou de fermeture de l'alimentation en agent de lavage.

**Fig. 1**

**Fig. 2**

δV / cm³ Filtrat/cm³ Filterkuchen

**Fig. 3**

EP 3 781 278 B1

**Fig. 4**

EP 3 781 278 B1

**Fig. 5**

**Fig. 6A**

**Fig 6B**

**Fig. 7**

**Fig 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0009527 A1
- US 33815745 A

**In der Beschreibung aufgeführte Nicht-Patentliteratur**

- **RUSLIM et al.** *Chemical Engineering Science*, 2007, vol. 62, 3951-3961
- Filter cake washing: Partial dissolution of organic particles and real-time monitoring based on Raman spectroscopy. **LOUHI-KULTANEN et al.** SEPARATION AND PURIFICATION TECHNOLOGY. ELSEVIER SCIENCE, 04 February 2008, vol. 59, 270-276
- **KOPRA et al.** Application of the refractometer in the measurement and monitoring of brown stock washing. *doctoral dissertation*, 01 January 2015, https://aaltodoc.aalto.fi/bitstream/handle/123456789/15451/is bn9789526061344.pdf?sequence=l&isAllowed=y